Europäisches Patentamt

European Patent Office

Office européen des brevets

(19)

(11) Veröffentlichungsnummer: **0 100 031**
**A2**

(12) # EUROPÄISCHE PATENTANMELDUNG

(21) Anmeldenummer: 83106900.0

(22) Anmeldetag: 14.07.83

(51) Int. Cl.³: **F 03 D 1/00**

(30) Priorität: **24.07.82 DE 3227700**

(43) Veröffentlichungstag der Anmeldung: **08.02.84**
**Patentblatt 84/6**

(84) Benannte Vertragsstaaten: **BE DE FR GB IT NL SE**

(71) Anmelder: **Böwe Maschinenfabrik GmbH, Haunstetter Strasse 112, D-8900 Augsburg (DE)**

(72) Erfinder: **Führing, Heinrich, Waldfriedenstrasse 7 1/2, D-8900 Augsburg (DE)**

(54) **Windenergiekonverter.**

(57) Die Erfindung betrifft einen Windenergiekonverter mit Einblattrotor (4), durch den ein Generator (7) angetrieben ist. Um eine möglichst einfache und doch leicht regelbare und sturmgesicherte Ausführung zu erreichen, ist vorgesehen, daß der Generator (7) im Netzverbund betrieben wird und für höhere Leistung zur Leistungsregelung durch Abriß der Strömung am Rotorblatt (4) ausgelegt ist. In besonderer Ausführungsform kann für den Zweck des Anfahrens und zur Sturmsicherung eine Zwei- oder Dreipunktsteuerung des Blattanstellwinkels (E) vorgesehen sein.

0100031

## Windenergiekonverter

Die Erfindung betrifft einen Windenergiekonverter mit einem Einblattrotor, durch den ein elektrischer Generator angetrieben ist. Solche Einblattrotoren finden Verwendung wegen ihrer höheren Schnelläufigkeit gegenüber mehrblättrigen Systemen. Auch können Gewicht und Abmessungen etwas kleiner gehalten werden als bei Mehrblattrotoren.

Die Regelung von Drehzahl und Drehmoment und damit der Leistung erfolgt bei bekannten Ein- und Mehrblattsystemen durch Regelung des Blattanstellwinkels entsprechend dem Leistungsprofil und der vorgegebenen Drehzahl. Derartige Regelungen sind relativ aufwendig und komplex. Zur Sturmsicherung ist es bei Einblattrotoren bekannt, die Drehachse des Rotors senkrecht nach oben zu richten, so daß das Rotorblatt in horizontaler Stellung als Windfahne wirkt oder in horizontaler Lage feststellbar ist. Bei anderen Rotorsystemen mit starren Flügeln erfolgt die Sturmsicherung durch Ausfahren von Spoilern oder Bremsklappen oder/ und durch Betätigung sonstiger, spezieller Bremseinrichtungen.

Der Erfindung liegt die Aufgabe zugrunde, eine möglichst einfache und billige, aber doch leicht und mit wenig Aufwand regelbare Ausführung eines Einblattwindenergiekonverters zu schaffen, die in entsprechender Weiterbildung auch noch die Möglichkeit einer zuverlässigen Sturmsicherung bietet.

Die Lösung dieser Aufgabe besteht darin, daß der Generator an ein Wechselstromnetz angeschlossen ist und für höhere Leistung zur Leistungsregelung durch Abriß der Strömung am Rotorblatt ausgelegt ist, d. h. daß der erfindungsgemäße Einblattrotor in einer bei Mehrblattrotoren bereits unter der Bezeichnung Stallregelung bekannten Weise betrieben werden soll. Hierunter wird bekanntlich das Abreißen der Strömung am Rotorblatt verstanden, wobei durch das Netz dem Generator und damit dem Rotor eine der Netzfrequenz entsprechende, konstante Drehzahl aufgezwungen wird, und wobei die Rotorleistung mit zunehmender Windgeschwindigkeit nicht einfach entsprechend ständig ansteigt, sondern nach Erreichen eines Maximums bei höherer Windgeschwindigkeit dann sogar abfällt, bis schließlich die Strömung über den ganzen Flügel hinweg abgerissen ist, und ein unstabiler Zustand des Rotors, das sogenannte Stallflattern, eintritt.

Für die Ausnutzung dieses Stalleffekts wird der Rotor so ausgelegt, daß das Leistungsmaximum bei höherer Windgeschwindigkeit (z. B. 15 m/s) liegt, ohne daß bereits die Strömung über den ganzen Flügel hinweg abgerissen ist, und die noch am Außenbereich der Rotorflügel anliegende Strömung ausreicht, um den einzelnen Flügel zu stabilisieren. Die Nennleistung des Generators wird etwas unterhalb des Maximums bei einer durchschnittlichen, mittleren Windgeschwindigkeit gewählt, wobei jedoch der Generator auch für höhere Leistung (z. B. entsprechend dem Maximum) ausgelegt ist, so daß eine gewisse Leistungsregelung bei schwankenden Windgeschwindigkeiten und vor allem die Vermeidung einer Überlastung des Generators erreicht wird.

Wegen der Sorge, daß die Gefahr des vorerwähnten Stallflatterns gerade bei den kürzeren Einblattrotoren in besonders hohem Maße gegeben sein könnte, hat man bisher eine

0100031

solche Stallregelung bei Einblattrotoren vermieden. Bei der Erfindung hat sich jedoch gezeigt, daß dieses Flattern, insbesondere bei entsprechender Breite des Rotorblattes, überraschenderweise vermieden werden kann. Durch die Erfindung wird also eine einfache Regelung bei Einblattrotoren ohne besonderen apparativen Aufwand erreicht.

Das Anlaufen eines solchen erfindungsgemäßen Einblattrotors kann durch verschiedene, an sich bekannte Maßnahmen erreicht werden, etwa durch Wahl einer geringeren Schnelllaufzahl, oder durch größere Blattiefe im Bereich des Innenflügels, z. B. durch Doppeltrapezflügel, oder durch eine Verwindung am Innenflügel. Auch eine Sturmsicherung kann mit Hilfe von Klappen oder Bremsen oder durch Hochfahren des Rotors erreicht werden.

Eine besonders vorteilhafte Ausführungsform ergibt sich jedoch, wenn bei dem erfindungsgemäßen Windenergiekonverter noch eine Zwei- oder Dreipunktsteuerung des Blattanstellwinkels vorgesehen ist. Im Rahmen der Erfindung dient diese Blattwinkelverstellung jedoch nicht zur Regelung, so daß der übliche Regelaufwand nicht erforderlich wird. Die Blattwinkelverstellung dient hier lediglich zur Einstellung eines gewünschten Betriebszustandes des Rotors. So kann durch Verdrehen des Rotorblattes gegenüber der Arbeitsstellung, etwa um einen Winkel von 45 - 50 ° gegenüber der Position parallel zur Vorwärtsbewegung des Blattes, in einfacher Weise eine Sturmsicherung erreicht werden, da der Rotor in dieser Position trotz hoher Windgeschwindigkeit nur relativ langsam dreht. Zwischen diesen beiden Stellungen, der Arbeitsstellung und der Sturmposition, kann bei Bedarf noch eine Zwischenstellung als Parkstellung vorgesehen sein, aus der der Rotor bei Stillstand oder langsamer Umdrehung allmählich in die Arbeitsstellung mit höherer Umdrehung gefahren werden kann. Die erfindungsgemäße Blattwinkelverstellung dient also hier gewissermaßen zum "Ein- und Ausschalten" des Rotors. Die technischen Mittel und apparativen Einrichtungen, um eine solche Blattwinkelverstellung zu erreichen, sind bekannt (z. B. DE-OS 31 10 263 und DE-OS 31 10 264).

Eine besonders einfache Ausführung des Rotorblattes ergibt sich, wenn man diesem einen ungefähr rechteckförmigen Umriß verleiht, was auch zu einem ruhigen Lauf beiträgt. Eine weitere Vereinfachung besteht erfindungsgemäß darin, daß das Rotorblatt unverwunden ist. Um stoßartig auftretende Belastungen am Rotor aufzunehmen, empfiehlt es sich, das Rotorblatt an seiner Drehachse mittels eines Schlaggelenkes zu lagern oder eine kardanische Aufhängung des Rotors an der Rotorwelle vorzusehen.

Die Erfindung ist in der Zeichnung beispielsweise und schematisch dargestellt. Es zeigen:

Figur 1:  eine Vorderansicht eines erfindungsgemäßen Windenergiekonverters,

Figur 2:  eine Seitenansicht des Windenergiekonverters,

Figur 3:  einen Schnitt gemäß der Linie III-III in Figur 1 und

Figur 4:  einen Verlauf der Leistungskurve bei Stallregelung.

Auf einem abgespannten, drehbaren Stahlrohrmast 1 ist ein nach allen Windrichtungen drehbares, durch eine Federstrebe abgestütztes Köcherrohr 2 angeordnet, das die Lagerung für die Rotorwelle, die Drehachse 3, des Rotors bildet. Am einen (in der Zeichnung rechten) Ende der Welle 3 befindet sich der Einblattrotor mit dem Rotorblatt 4 und einem auf einem in entgegengesetzte Richtung zum Rotorblatt 4 weisenden Arm 5 befestigten Gegengewicht 6. Am anderen Ende der Rotorwelle ist, über ein nicht näher dargestelltes

0100031

Getriebe, ein elektrischer Generator 7 angeschlossen, an dessen Ausgangsklemmen die aus der Windenergie erhaltene elektrische Energie abgenommen wird. Durch den Pfeil 14 ist die in dem gezeichneten Beispiel parallel zur Zeichenebene verlaufende Windrichtung angegeben.

Der Rotor 4, 5 ist an der Rotorwelle über ein Schlaggelenk 12 aufgehängt, das ihm Ausweichbewegungen erlaubt. Beispielsweise kann das Rotorblatt 4 sich etwa in dem Bereich zwischen den Linien 8, 9 um eine Achse quer zur Rotorwelle bewegen. Anstelle des Schlaggelenkes kann auch eine kardanische Lagerung des Rotors an der Rotorwelle vorgesehen sein.

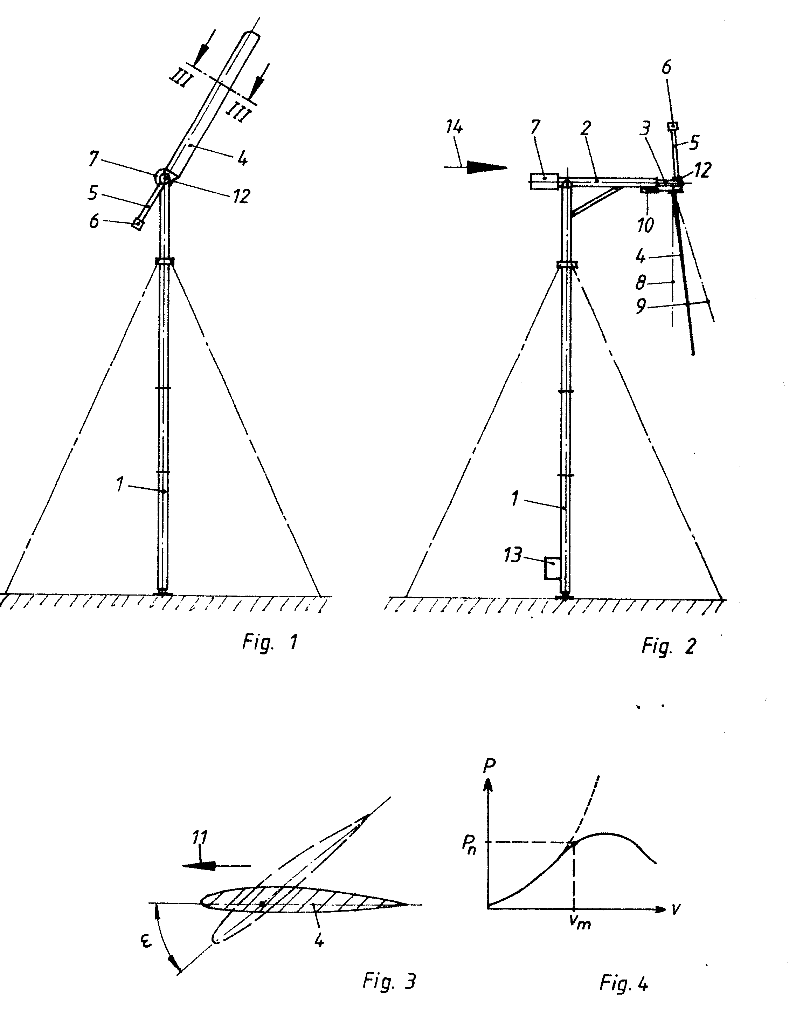

Mit 10 ist ein hydraulischer Zylinder mit Rückholdruckfeder bezeichnet, der als Antrieb zur Verstellung des Anstellwinkels des Rotorblattes 4 dient. Mittels dieser Verstelleinrichtung kann das Blatt 4 aus seiner Arbeitsstellung (mit ausgezogenen Linien in Figur 3 dargestellte Lage) durch Verschwenken um einen Winkel in eine Stellung gebracht werden (Darstellung in gestrichelten Linien in Figur 3), in der es schräg zu seiner Vorwärtsbewegung (Pfeil 11) steht. Diese Stellung dient in diesem Beispiel als Sturmsicherung, da hier in dieser schrägen Lage der Rotor auch bei hoher Windgeschwindigkeit relativ langsam dreht. Von einem unten am Mast 1 befindlichen Schaltkasten 13, der sich mit dem Mast dreht, gehen die verschiedenen elektrischen und hydraulischen Leitungen nach oben. Die elektrische Energie wird über Schleifringe nach außen abgeführt.

In Figur 4 ist der grundsätzliche Verlauf der Rotorleistung P in Abhängigkeit von der Windgeschwindigkeit v bei einer Stallregelegung angegeben. Die Nennleistung $P_n$ liegt bei einer mittleren Windgeschwindigkeit $v_m$ kurz unterhalb des Leistungsmaximums. So lange die Windgeschwindigkeit sich

0100031

nicht sehr stark ändert, ändert sich die Generatorleistung nur innerhalb geringer Grenzen. Insbesondere wird auch bei noch höherer Windgeschwindigkeit der Generator nicht über das mit dem gegebenen Rotor erreichbare Leistungs- maximum belastet.

0100031

Patentansprüche

1. Windenergiekonverter mit einem Einblattrotor, durch den ein Generator angetrieben ist, d a d u r c h g e k e n n z e i c h n e t, daß der Generator (7) an ein Wechselstromnetz angeschlossen ist und für höhere Leistung zur Leistungsregelung durch Abriß der Strömung am Rotorblatt (4) ausgelegt ist.

2. Windenergiekonverter nach Anspruch 1, d a d u r c h g e k e n n z e i c h n e t, daß eine Zwei- oder Dreipunktsteuerung des Blattanstellwinkels ( ) vorgesehen ist.

3. Windenergiekonverter nach Anspruch 1 oder 2, d a - d u r c h g e k e n n z e i c h n e t, daß das Rotorblatt (4) einen etwa rechteckförmigen Umriß aufweist.

4. Windenergiekonverter nach Anspruch 1 oder folgenden, d a d u r c h g e k e n n z e i c h n e t, daß das Rotorblatt (4) unverwunden ist.

5. Windenergiekonverter nach Anspruch 1 oder folgenden, d a d u r c h g e k e n n z e i c h n e t, daß das Rotorblatt (4) an seiner Drehachse (3) mittels eines Schlaggelenkes oder Kardangelenkes (12) gelagert ist.

0100031

Fig. 1

Fig. 2

Fig. 3

Fig. 4